Europäisches Patentamt

European Patent Office

Office européen des brevets

(11) Publication number: **0 220 564**
**B1**

(12) **EUROPEAN PATENT SPECIFICATION**

(45) Date of publication of patent specification: **13.12.89**

(21) Application number: **86113988.9**

(22) Date of filing: **09.10.86**

(51) Int. Cl.⁴: **F 02 B 37/12,** F 02 B 39/00,
F 01 D 25/08

(54) Turbo-supercharger for internal combustion engine.

(30) Priority: **22.10.85 JP 236045/85**

(43) Date of publication of application:
**06.05.87 Bulletin 87/19**

(45) Publication of the grant of the patent:
**13.12.89 Bulletin 89/50**

(84) Designated Contracting States:
**DE GB**

(56) References cited:
DE-A-2 044 026
FR-A-2 035 147
GB-A-2 134 602
JP-U-58 114 844

PATENT ABSTRACTS OF JAPAN, vol. 11, no. 14
(M-553)2461r, 14th January 1987; & JP-A-61 190
122 (HITACHI LTD) 23-08-1986

PATENT ABSTRACTS OF JAPAN, vol. 7, no. 254
(M-255)1399r, 11th November 1983; & JP-A-58
138 222 (HITACHI SEISAKUSHO K.K.) 17-08-1983

PATENT ABSTRACTS OF JAPAN, vol. 9, no. 139
(M-387)1862r, 14th June 1985; & JP-A-60 19 918
(HONDA GIKEN KOGYO K.K.) 01-02-1985

(73) Proprietor: **Isuzu Motors Limited**
**22-10 Minamioi 6-chome Shinagawa-ku**
**Tokyo (JP)**

(72) Inventor: **Kawamura, Hideo Isuzu Motors Ltd.**
**Fujisawa Works**
**8 Tsuchidana Fujisawa-shi**
**Kanagawa-ken (JP)**

(74) Representative: **Goddar, Heinz J., Dr. et al**
**FORRESTER & BOEHMERT Widenmayerstrasse**
**4/I**
**D-8000 München 22 (DE)**

(56) References cited:
PATENT ABSTRACTS OF JAPAN, vol. 5, no. 199
(M-102)871r, 17th December 1981; & JP-A-56
118 521 (ISHIKAWAJIMA HARIMA JUKOGYO
K.K.) 17-09-1981

PATENT ABSTRACTS OF JAPAN, vol. 7, no. 41
(M-194)1186r, 18th February 1983; & JP-A-57
191 420 (ISUZU JIDOSHA K.K.) 25-11-1982

Courier Press, Leamington Spa, England.

## Description

The present invention relates to a turbo-supercharger for an internal combustion engine.

Prior art

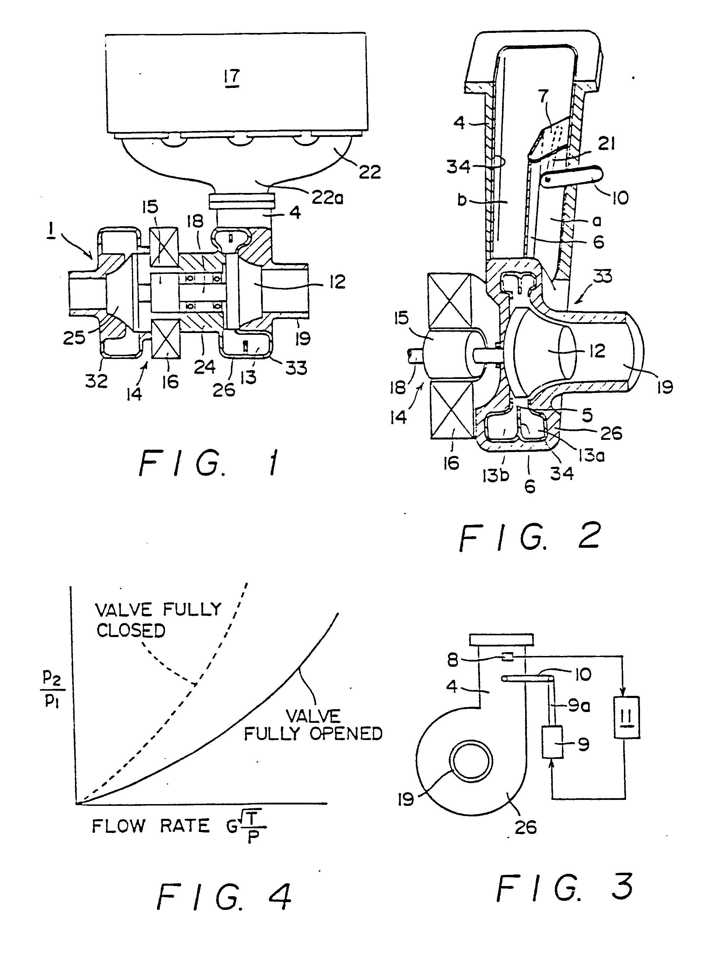

In a turbo-supercharger provided on the internal combustion engine for vehicles, generally, the flow rate of exhaust air at low rotational frequency of the engine (r.p.m.) is insufficient, thus failing to obtain a satisfactory performance. More specifically, the ratio $P_2/P_1$ between inlet pressure and outlet pressure with respect to the flow rate of exhaust air to the turbo-supercharger varies as shown in Fig. 4.

Since the efficiency of turbine is expressed by

$$D = 1 - (P_1/P_2)^{K-1/K},$$

the ratio of inlet pressure and outlet pressure produces a great effect on the efficiency. The higher the inlet pressure the better turbine efficiency is obtained. Accordingly, for the internal combustion engine for a vehicle wherein the flow rate of exhaust air is varied in a wide range, it is very difficult to effectively utilize an exhaust energy for intake supercharging using one and the same (a single) turbine or to recover the energy as a power to a crank shaft.

For example, in Japanese Utility Model Application Laid-Open No. 114844/1983 there is proposed an arrangement wherein in the turbine disc, a low-speed disc and a high-speed disc are provided internally and externally, respectively, and an opening and closing valve which is closed when the flow rate of exhaust air is small is provided in a passage connected to a high-speed turbine chamber. The aforesaid arrangement is relatively complicated in construction and is disadvantageous in view of cost. Moreover, a partitioning wall for dividing a passage connected to a high-speed turbine chamber and a low-speed turbine chamber is cast integral with a turbine housing, and a wall thickness thereof is great, and if an attempt is made to mount a heat insulating material on the internal wall surface of the passage, an area of the passage becomes further narrowed.

Problem intended to be solved by the invention

It is an object of the present invention to provide a turbo-supercharger which is small in size and which has enough space to provide a passage area and which can be easily manufactured.

Means used to solve the problem

For achieving the aforementioned object, the present invention provides an arrangement wherein a partitioning plate, which is formed of a heat-resisting metal, for dividing a scroll passage into two sections, is integrally cast into a turbine housing, and an opening and closing valve is disposed in one of the two divided passages.

Operation

In casting a turbine housing 26, a heat-resisting metal plate such as stainless is cast into a turbine scroll 4, which is divided into two passages a and b. Therefore, the wall thickness of the partitioning wall 6 can be considerably reduced as compared with one in which the wall is integrally cast, whereby areas of the scroll passages a and b may be widened.

Embodiment of the invention
Brief description of the drawings

Fig. 1 is a plan view in section of a turbo-supercharger according to the present invention; Fig. 2 is a perspective view with essential parts of the turbo-supercharger shown in section; Fig. 3 is a side view of the same; and Fig. 4 is a diagram for explaining the performance of the turbo-supercharger.

A preferred embodiment of the present invention will be described hereinafter. As shown in Fig. 1, a turbine scroll 4 of a turbo-supercharger 1 is coupled to a collecting pipe 22a of an exhaust manifold 22 of the internal combustion engine 17. In the turbo-supercharger 1, a turbine 33 and a blower 32 are coupled to one end and the other end, respectively, of a casing 24. A turbine disc 12 and a blower disc 25 are coupled to one end and the other end, respectively, of a shaft 18 supported on the casing 24 by means of bearings. A rotor 15 of a generator 14 is coupled to a shaft 18, and a stator 16 encircling the rotor 15 is coupled to the casing 24. A turbine housing 26 for a turbine 33 is provided with a turbine scroll 4 connected to the collecting pipe 22a. Scroll passages a and b are spirally formed within the turbine housing 26 so as to surround the turbine disc 12, and are connected to a scroll chamber 13.

Exhaust air from the exhaust manifold 22 enters the scroll chamber 13 through the turbine scroll 4 and impinges upon the turbine disc 12 to rotate the latter and thence flows outside from the exhaust pipe 19. The blower disc 25 along with the shaft 18 are rotated and driven by the turbine disc 12 to effect intake supercharging.

According to the present invention, as shown in Fig. 2, the turbine scroll 4 is divided into two scroll passages a and scroll passages b by means of the partitioning plate 6 formed heat-resisting metal such as stainless, and an opening and closing valve 7 is disposed on one scroll passage a. A lever 10 is coupled to a shaft 21 of the valve 7 and is driven by an electromagnetic actuator 9 (Fig. 3). An electric signal of a pressure sensor 8 provided on the inlet of the turbine scroll 4 is input into an electronic controller 11. When pressure lowers to a level below a predetermined value, the electromagnetic actuator 9 is excited by the output signal of the controller 11 and a rod 9a thereof is extended so that the scroll passage a is closed by the valve 7. The valve 7 is configured so as to close the scroll passage a in a state inclined to the flow of exhaust air so that when the end of the scroll passage *a* is closed, the exhaust air entered the turbine scroll 4 may flow into the scroll passage *b* without any resistance.

The partitioning plate 6 extends into the turbine housing 26 encircling the turbine disc 12 from the turbine scroll 4 to define a scroll chamber 13a and a scroll chamber 13b. In this manner, the partitioning plate 6 is cast integral with the turbine scroll 4 and the turbine housing 26. Preferably, a heat-insulating metal plate 34 such as stainless, which heat-insulates the interior of the turbine scroll 4 and turbine housing 26 and prevents exhaust heat from being scattered outside, and the partitioning plate 6 are integrally connected, which are combined with a core and set in a mold, and the heat-insulating metal plate 34 is cast so as to constitute inner wall surfaces of the turbine scroll 4 and the turbine housing 26.

According to the turbo-supercharger constructed as described above, the electromagnetic actuator 9 is driven by the electric signal from the electronic controller 11 which receives the electric signal detected by the pressure sensor 8. When the rotational frequency of the engine (r.p.m.) is high and the amount of exhaust is large, the inlet pressure is also high, and the rod 9a of the actuator 9 is projected or extended by the force of a return spring not shown and the valve 7 causes the scroll passages *a* to open. Thus, the exhaust air flows into the scroll chambers 13a and 13b through the scroll passages *a* and *b*, respectively, to rotate the turbine disc 12. On the other hand, when the rotational frequency of the engine (r.p.m.) is low and the flow rate of exhaust air is small the inlet pressure is also low and the electromagnetic actuator 9 is excited whereby the rod 9a is withdrawn and the lever 10 is rotated clockwise in Fig. 2, as a result of which the valve 7 causes the scroll passage *a* to close. In this way, the exhaust air flows into the scroll chamber 13b through the scroll passage *b* to rotate and drive the turbine disc 12. When the valve 7 is closed, the inlet pressure of the scroll passage *b* increases, and even if the flow rate is small, the pressure ratio is high as shown by the broken line of Fig. 4 to increase the turbine efficiency n. Thus, the lowering of the rotational frequency (r.p.m.) of the turbine disc 12 is prevented and intake supercharging with high efficiency is achieved.

When the flow rate of exhaust air is excessively large, the valve 7 is opened and the load is connected to the generator 14. More specifically, an electric power generated by the generator 14 is supplied to an electric motor coupled to a crank shaft not shown thereby preventing the rotational frequency of the turbine disc 12 from being increased, an excessively great exhaust energy is converted into an electric energy, which is transmitted as a driving torque to the crank shaft of the engine through the motor.

Effect of the invention

According to the present invention, as described above, a turbine scroll is divided by a partitioning plate made of metal into two scroll passsages in order to maintain the turbine efficiency corresponding to a variation in flow rate of exhaust air, the metal partitioning plate being cast integral with the turbine scroll and turbine housing. Therefore, the device is easily manufactured and in addition, the wall thickness of the partitioning wall can be considerably reduced as compared with prior art in which a partitioning wall is formed integral with a turbine housing by casting, whereby the whole turbine housing can be made into a smaller size and an area of the passage can be widened. In addition, it is possible to considerably increase the turbine efficiency. Furthermore, since the partitioning plate is thin, loss of heat transmitted to the turbine scroll and casing through the partitioning plate is considerably reduced.

Claims

1. A turbo-supercharger with a partitioning plate (6) in and integral with a turbine housing (26), said partitioning plate (6) being formed of a heat resisting metal and dividing a scroll passage into two sections (a, b), and with an opening and closing valve (7) disposed in one of said passage sections (a, b), characterized in that the partitioning plate (6) is integrally cast into the turbine housing (26).

2. Turbo-supercharger according to claim 1, characterized by a heat-insulating metal plate (34) such as stainless metal plate, which heat-insulates the interior of the turbine scroll (4) and turbine housing (26) and prevent exhaust heat from being scattered outside.

3. Turbo-supercharger according to claim 2, characterized in that the plate (34) and the partitioning plate (6) are integrally connected, being combined with a core and set in a mold, and that the heat-insulating metal plate (34) is cast so as to constitute inner wall surfaces of the turbine scroll (4) and turbine housing (26).

Patentansprüche

1. Turbolader mit einer Trennplatte (6) in einem und mit diesem einstückigen Turbinengehäuse (26), wobei die Trennplatte (6) aus einem wärmebeständigen Material gebildet ist und eine Schneckenpassage in zwei Abschnitten (a, b) unterteilt, und mit einem Öffnungs- und Schließventil (7), das in einer der Passageabschnitte (a, b) angeordnet ist, dadurch gekennzeichnet, daß die Trennplatte (6) einstückig in das Turbinengehäuse (26) eingegossen ist.

2. Turbolader nach Anspruch 1, gekennzeichnet durch eine wärmeisolierende Metallplatte (34) wie einer rostfreien Metallplatte, die das Innere der Turbinenschnecke (4) und des Turbinengehäuses (26) wärmeisoliert und der Verlust von Abgaswärme nach außen verhindert.

3. Turbolader nach Anspruch 2, dadurch gekennzeichnet, daß die Platte (34) und die Trennplatte (6) einstückig verbunden sind, mit einem Kern kombiniert und in eine Gußform eingesetzt sind, und daß die wärmeisolierende Metallplatte (34) gegossen ist, so daß sie eine innere Wandungsfläche der Turbinenschnecke (4) und des Turbinengehäuses (26) bildet.

**Revendications**

1. Turbocompresseur de suralimentation comportant une plaque de cloisonnement (6) disposées dans une enveloppe de turbine (26) en une seule pièce avec elle, ladite plaque de cloisonnement (6) étant constituée en un métal résistant à la chaleur et divisant un passage de voluté en deux parties (a, b), une ouverture et une soupape de fermeture (7) étant disposées dans l'une desdites parties (a, b) du passage, caractérisé en ce que la plaque de cloisonnement (6) est coulée en une seule pièce dans l'enveloppe de turbine (26).

2. Turbocompresseur de suralimentation selon la revendication 1, caractérisé par une plaque métallique calorifuge (34) telle qu'une plaque en métal inoxydable qui assure l'isolement thermique de l'intérieure de la volute de turbine (4) et de l'enveloppe de turbine (26) et évite que la chaleur d'échappement soit dispersée à l'extérieur.

3. Turbocompresseur de suralimentation selon la revendication 2, caractérisé en ce que la plaque (34) et la plaque de cloisonnement (6) sont assemblées en une seule pièce, en étant combinées avec un noyau et placées dans un moule, et en ce que la plaque métallique calorifuge (34) est coulée de manière à constituer des surfaces de parois intérieures de la volume de turbine (4) et de l'enveloppe de turbine (26).

FIG. 1

FIG. 2

FIG. 4

FIG. 3